# FASCICULE DE BREVET EUROPEEN

(11) **EP 3 887 230 B1**
(45) Date de publication et mention de la délivrance du brevet: **19.10.2022**
(21) Numéro de dépôt: 19820835.7
(22) Date de dépôt: 07.11.2019
(51) Int. Cl.: B62D 25/04, B62D 27/02

(54) **RENFORT DE PIED AVANT DE VEHICULE AUTOMOBILE**
FRONTSÄULENVERSTÄRKUNG FÜR EIN KRAFTFAHRZEUG
FRONT PILLAR REINFORCEMENT OF A MOTOR VEHICLE

(30) Priorité: 30.11.2018 FR 1872186
(43) Date de publication de la demande: 06.10.2021
(73) Titulaire: PSA Automobiles SA, 78300 Poissy (FR)
(72) Inventeur: RIVIERRE, Laurent, 75015 PARIS (FR)
(86) Numéro de dépôt international: PCT/FR2019/052653
(87) Numéro de publication internationale: WO 2020/109689

(56) Documents cités:
- CN-U- 202 935 435
- CN-U- 205 314 755
- CN-U- 207 129 003
- FR-A1- 2 926 056
- FR-A1- 2 929 580

## Description

La présente invention revendique la priorité de la demande française 1872186 déposée le 30 Novembre 2018.

L'invention a trait à un renfort interne de pied avant d'automobile, conformé pour offrir une résistance améliorée lors des chocs frontaux.

De manière générale, il est connu, dans les véhicules automobiles, de constituer des carrosseries en acier avec éventuellement des parties en alliage d'aluminium. Ces carrosseries peuvent être constituées d'une superposition de pièces de tôle d'acier embouties, typiquement une ossature plus ou moins complexe et également une peau extérieure, avec des espaces entre les pièces de tôle contrôlés par la structuration de celles-ci obtenue à l'emboutissage, donnant à la carrosserie une épaisseur sans l'alourdir excessivement. L'espace entre les pièces de tôle peut être utilisé pour mettre en place des inserts de renfort ou faire passer des câbles ou autres équipements du véhicule.

Il est connu de placer des renforts, typiquement en acier, en des zones spécifiquement choisies pour assurer la résistance de zones critiques du véhicule en cas de choc en conditions de circulation, par exemple en cas de choc frontal.

L'épaisseur de la tôle d'acier de la carrosserie et la nuance de l'acier utilisé sont étudiées pour améliorer la résistance aux chocs. C'est également le cas pour l'épaisseur et la nuance de l'acier utilisé pour les pièces de renfort.

Ainsi, le pied avant du véhicule automobile, qui est, sur chaque côté du véhicule, la zone de la carrosserie entre le passage de roue avant (ainsi qu'à la limite du tablier) et l'évidement de portière avant, et qui porte les charnières supérieure et inférieure de la portière avant, est sujette à des contraintes potentiellement violentes lors d'un choc frontal, et il est nécessaire de veiller à sa résistance.

On connait du document CN202935435_U un renfort de pilier pour véhicule automobile comprenant deux nervures parallèles. Cette solution ne permet pas de maintenir le véhicule à masse constante, car il est nécessaire de rajouter une pièce, ce qui augmente la consommation ainsi que le prix de revient final.

Le document CN207129003 U décrit une pièce de tale emboutie pour la structuration interne et la résistance mécanique d'un pied avant de carrosserie de véhicule automobile, comprenant une surface latérale a positionner verticalement et, vis-à-vis du véhicule, longitudinalement, dans le volume du pied avant entre le passage de roue et l'évidement de portière, ladite surface latérale étant limitée par un flanc avant et un flanc arrière, et portant une interface de passage d'éléments de charnière inférieure de portière avant.

Le document FR2926056 décrit un renforcement de pied avant avec une pièce de tôle comportant des nervures dans sa partie inférieure.

L'objectif de l'invention est de proposer une solution qui n'alourdit pas le véhicule mais que le sécurise en assurant une plus grande résistance aux chocs frontaux, notamment en garantissant la tenue de la face avant du pied avant du véhicule, en supprimant ou diminuant les phénomènes d'écrasement de la section de bas de pied avant, se manifestant par des plis marqués entre l'interface de passage d'éléments de charnière inférieure de porte avant et le bas de pied avant, tout en maintenant la possibilité d'implanter des inserts gonflants de bas de pied avant, intérieurs et extérieurs.

Elle prend appui sur l'existence d'un renfort de pied avant du côté extérieur du véhicule, juste derrière le côté d'habitacle - la peau de carrosserie - qui est constitué par une tôle extérieure de la carrosserie.

Ce renfort de pied avant est une tôle emboutie qui, dans le véhicule, a des faces avant et arrière (appelés ci-après des flancs de jonction, car ils joignent des surfaces de la tôle emboutie) sensiblement parallèles l'une à l'autre définissant un tunnel de renfort vertical pour le côté de l'habitacle, à mi-hauteur de la portière avant, et dont la section a un rôle structurel pour la tenue de celui-ci face aux chocs. Il s'agit là d'une pièce de tôle emboutie pour la structuration interne d'un pied avant, présentant une surface principale de renfort positionnée verticalement et, vis-à-vis du véhicule, longitudinalement, dans le volume du pied avant, et qui donc en cas de choc frontal subit des efforts qui sont dirigés selon son plan de son bord avant vers son bord arrière. Des éléments des charnières inférieur et supérieur de la portière traversent le renfort qui présente des réservations traversantes à cette fin.

Afin de renforcer la résistance aux chocs sans alourdir la carrosserie, il est ainsi proposé, en premier lieu, une pièce de tôle emboutie pour la structuration interne d'un pied avant de carrosserie de véhicule automobile, comprenant une surface à positionner verticalement et, vis-à-vis du véhicule, longitudinalement en sorte d'en faire une surface latérale, dans le volume du pied avant entre le passage de roue et l'évidement de portière, ladite surface latérale étant limitée par un flanc avant et un flanc arrière, et portant une interface de passage d'éléments de charnière inférieure de portière avant.

De manière remarquable, ladite surface latérale porte une première et une deuxième nervures de préférence parallèles l'une à l'autre, et en tout cas en dessous de l'interface de passage d'éléments de charnière intérieure, et s'étendant transversalement vis-à-vis du pied avant et de la surface latérale de l'approche du flanc avant à l'approche du flanc arrière.

Grâce à ces caractéristiques, la zone du renfort est préservée des phénomènes d'écrasement de la section de bas de pied avant, et débarrassée des plis marqués entre l'interface de passage d'éléments de charnière inférieure de porte avant et le bas de pied, sans pour autant que le poids de l'agencement soit augmenté, et sans que l'on empêche l'implantation des inserts gonflants de bas de pied avant, intérieurs et extérieurs.

Diverses caractéristiques supplémentaires peuvent être prévues, seules ou en combinaison :
- les première et deuxième nervures sont séparées par une interface d'implantation d'un insert gonflant de bas de pied avant de carrosserie ;
- ladite surface porte une troisième nervure au-dessus de l'interface de passage d'éléments de charnière, et en dessous d'une interface de fourreau de portière ;
- la profondeur des première et deuxième nervures est comprise entre 5 et 7 mm ;
- la longueur des première et deuxième nervures est comprise entre 35 et 50 mm ;
- ladite pièce comprend une embouchure inférieure le long de laquelle le flanc arrière épouse le coude de bas d'évidement de portière sur sensiblement un quart de cercle et une embouchure supérieure au-dessus d'une interface de fourreau de porte portée par la surface, voire au-dessus d'une interface de passage d'éléments de charnière supérieure.

Il est proposé, en second lieu, une carrosserie de véhicule automobile comprenant une pièce de tôle emboutie pour la structuration interne et le renfort mécanique d'un pied avant telle qu'évoquée, la pièce de tôle emboutie pour la structuration interne et le renfort mécanique d'un pied avant étant placée entre d'une part une tôle emboutie de côté extérieur d'habitacle et d'autre part une tôle emboutie de doublure intérieure d'aile avant et un longeron intérieur avant de bas de portière.

La carrosserie peut comprendre un renfort de longeron de bas de portière qui prolonge la pièce de tôle emboutie pour la structuration interne et le renfort mécanique d'un pied avant vers l'arrière du véhicule entre la tôle emboutie de côté extérieur d'habitacle et le longeron intérieur avant de bas de portière.

La carrosserie de véhicule automobile peut comprendre de plus un gousset supérieur de pied avant qui porte avec la surface latérale de la pièce de tôle emboutie pour la structuration interne et le renfort mécanique d'un pied avant une interface de passage d'éléments de charnière supérieure de portière avant.

Il est aussi proposé un véhicule automobile comprenant une telle carrosserie et une portière avant comprenant une charnière inférieure de portière avant dont des éléments sont insérés dans ladite interface de passage d'éléments de charnière inférieure de portière avant.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue de côté, depuis l'extérieur de la carrosserie, d'un véhicule automobile incorporant l'invention, pour situer le contexte d'implantation de celle-ci ;
- la figure 2 est une vue de côté depuis l'intérieur de la carrosserie, pour compléter la présentation du contexte d'implantation ;
- la figure 3 est une vue similaire à celle de la figure 1, une partie de la carrosserie ayant été enlevée pour faire apparaître les structures internes ;
- la figure 4 est une vue similaire à celles des figures 1 et 3 présentant le renfort de pied avant selon l'invention ;
- la figure 5 est une vue du dessus, en coupe, du renfort de pied avant selon l'invention dans son environnement d'implantation ;
- la figure 6 montre les résultats avantageux de l'invention, lors d'un choc frontal simulé.

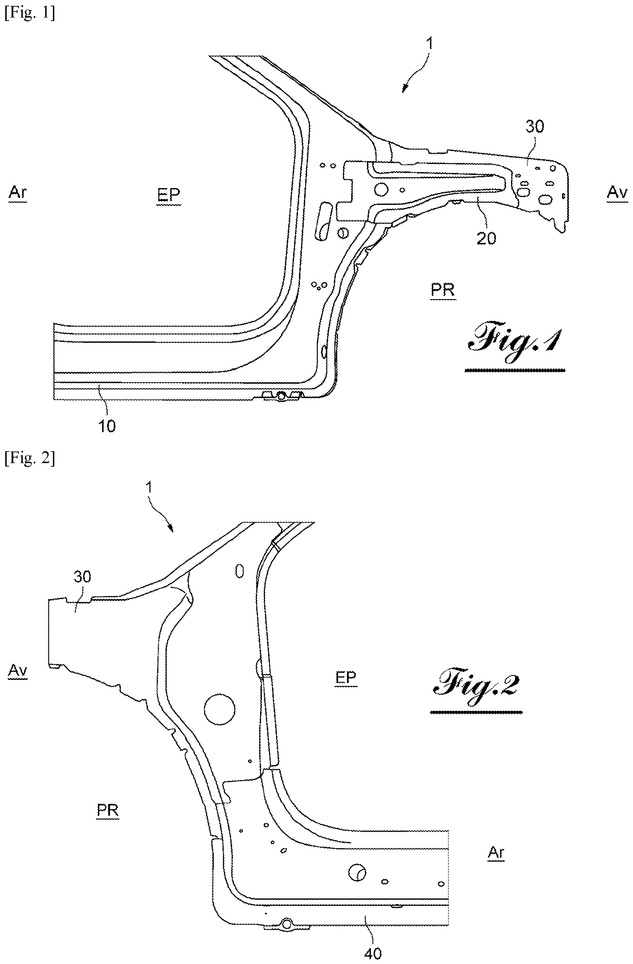

[Fig. 1] En figure 1, on a représenté le pied avant 1 du véhicule automobile selon l'invention, dans son contexte de carrosserie. La vue est une vue de l'extérieur à droite du véhicule automobile, avec l'arrière Ar à gauche de la figure et l'avant Av à droite de la figure. On visualise le côté d'habitacle 10 qui définit l'évidement de portière avant EP.

On visualise également le renfort d'aile 20, pièce horizontale qui, avec le côté de l'habitacle 10, définit le passage de roue PR.

On visualise toujours en arrière par rapport aux deux pièces précédentes, la doublure d'aile avant 30, partiellement cachée.

Le côté d'habitacle 10 possède, visualisée sur l'image, une section horizontale inférieure, une section verticale constituant le pied avant 1 et une section oblique constituant une partie latérale de l'encadrement du pare-brise, ainsi qu'une partie supérieure de l'encadrement EP de la portière avant droite.

[Fig. 2] En figure 2, on a représenté la même zone de la structure de l'habitacle, mais cette fois-ci, vu de l'intérieur. On reconnaît ainsi le pied avant 1, on découvre plus en détails la doublure avant 30 qui encadre le passage de roue PR sur un grand secteur angulaire, et on découvre le longeron intérieur avant 40 qui constitue une pièce essentiellement horizontale au pied de la portière du côté intérieur de l'habitacle.

L'évidement de portière EP est donc délimité sur la figure vers le bas par le longeron intérieur avant, et sur la gauche vers l'avant de la voiture par l'extrémité du longeron intérieur avant 40 qui forme à l'avant un coude sur une brève distance et ensuite en montant vers le haut par la doublure d'aile avant 30 qui constitue l'essentiel du pied avant 1 sur cette face.

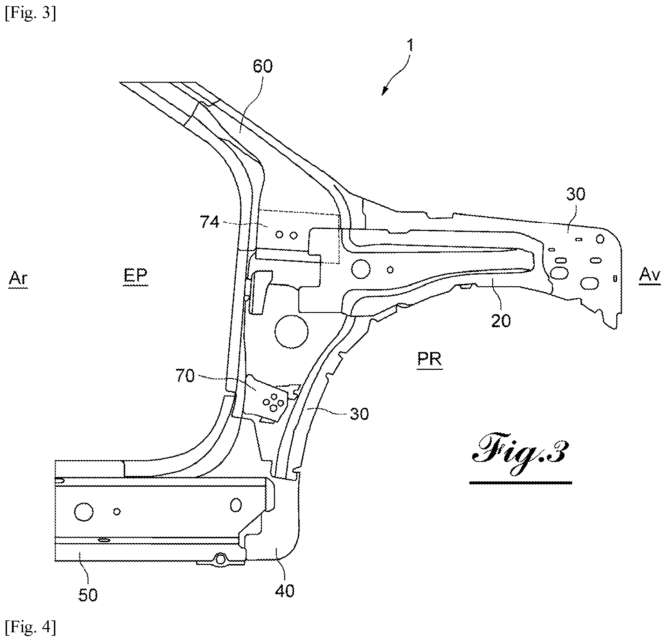

[Fig. 3] En figure 3, on a représenté selon l'angle de vue de la figure 1, c'est-à-dire depuis l'extérieur du véhicule, les structures internes de la carrosserie, une fois le côté d'habitacle 10 retiré, et une fois le renfort pied avant qui fait l'objet de l'invention également retiré. Le renfort pied avant sera présenté aux figures suivantes.

L'encadrement de l'évidement de portière EP est constitué sur cette vue en partie basse d'un renfort de longeron 50 horizontal, se superposant au longeron intérieur avant 40, dont l'emprise horizontale est néanmoins plus vaste puisque celui-ci se prolonge un peu plus vers l'avant Av que le renfort de longeron 50 et un peu plus haut que celui-ci puisque, contrairement au longeron intérieur avant 40, le renfort de longeron 50 ne comporte pas de coude vers le haut. La figure fait ainsi apparaître en arrière-plan du renfort de longeron 50 les parties du longeron intérieur avant 40 qui dépassent de l'emprise du renfort de longeron 50.

En se déplaçant vers le haut dans le pied avant 1, on observe sur cette figure la doublure d'aile avant 30 en arrière-plan, visible par sa face externe et qui porte notamment un renfort de charnière inférieure 70 vers l'extérieur à la hauteur de l'extrémité avant et supérieure du longeron intérieur avant 40, et un renfort de charnière supérieure 74 vers l'extérieur à une hauteur intermédiaire entre le haut du passage de roue PR et le bas du pare-brise, partiellement dissimulé sur la vue par un gousset supérieur de pied avant 60 qui est également présent et visible sur la figure à la limite entre le capot, le pare-brise et la portière avant droite.

La figure permet également de visualiser le renfort d'aile avant 20 qui avait été déjà commenté en relation avec la figure 1, et qui dissimule aussi à la fois une partie du gousset supérieur de pied avant 60 et le renfort de charnière supérieur 74.

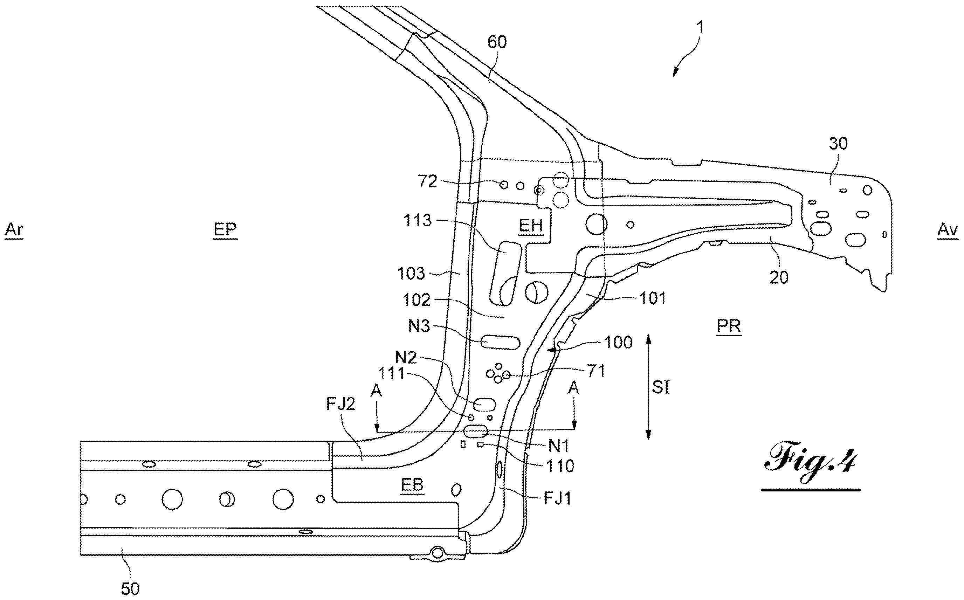

[Fig. 4] En figure 4, on a rajouté par rapport à la figure 3 le renfort de pied avant 100, qui participe à la structuration interne en portant différentes fonctions en lien avec la portière et plus précisément ses charnières et sa connexion électrique au réseau de bord, et qui participe à la résistance mécanique face aux chocs frontaux.

Celui-ci est une pièce de tôle emboutie, essentiellement verticale s'étendant du renfort de longeron 50 auquel il est abouté jusqu'au droit du gousset supérieur de pied avant 60, derrière lequel il est glissé sur une faible surface à l'approche du pare-brise, du côté de l'intérieur du véhicule (d'où la délimitation du renfort de pied avant 100 par des pointillés sur la figure en partie haute de la pièce, invisible puisque cachée par le gousset supérieur de pied avant 60).

Le renfort d'aile 20 est superposé sur la vue à la fois au gousset supérieur avant 60 et au renfort de pied avant 100, au droit de leur jonction vers l'avant du véhicule du côté extérieur latéral de celui-ci (d'où la délimitation du renfort de pied avant 100 par des pointillés sur la figure en partie droite de la pièce, invisible puisque cachée par le renfort d'aile 20).

Le renfort de pied avant 100 est une pièce en tôle emboutie formant un tunnel s'étendant verticalement d'une embouchure basse EB, faisant face au renfort de longeron 50 à une embouchure haute EH, au droit du gousset supérieur de pied avant 60.

Au niveau de l'embouchure basse EB, le renfort de pied avant 100 - et plus précisément son flanc de jonction arrière FJ2 - épouse le coude de bas d'évidement de portière EP sur sensiblement un quart de cercle, avant de s'abouter au renfort de longeron 50.

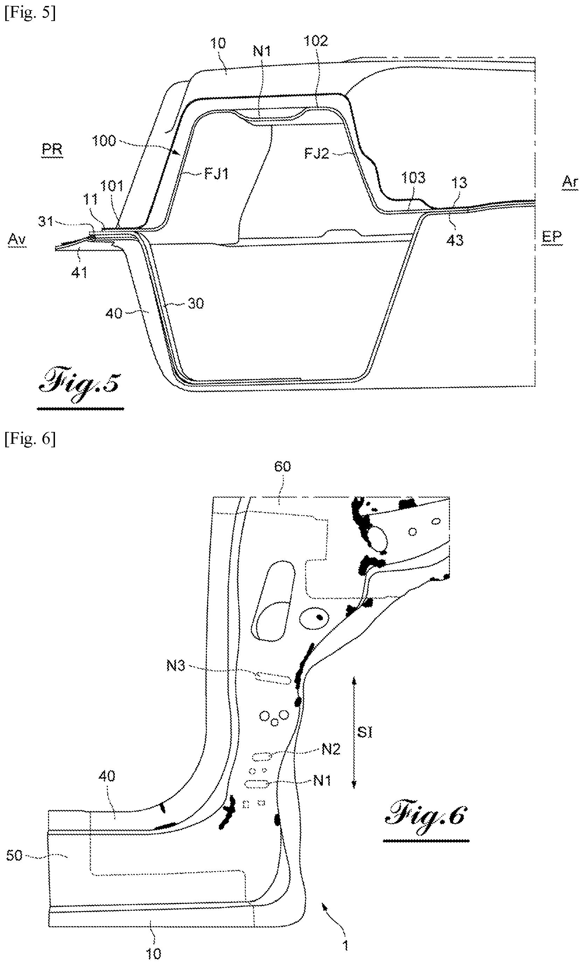

Comme cela se voit vu de côté sur la figure 4, et vu en coupe sur la figure 5, la tôle emboutie du renfort de pied avant 100 est disposée, vis-à-vis du véhicule, longitudinalement et est ainsi constituée successivement, du passage de roue PR vers l'évidement de portière EP,
d'une surface de réception de l'aile 101 sensiblement verticale à une première côte horizontale, dans la direction latérale du véhicule ;
d'une surface de renforcement structurel 102 allongée et sensiblement verticale à une deuxième côte horizontale, toujours dans la direction latérale du véhicule, décalée par rapport à la première côte horizontale vers l'extérieur du véhicule, - cette surface 102 latérale est disposée vis-à-vis du véhicule, longitudinalement, comme l'ensemble du renfort de pied avant 100 ;
et d'une troisième surface de réception de portière 103 sensiblement verticale, à une côte horizontale, toujours dans la direction latérale du véhicule, proche de la première côte horizontale.

Ainsi, le renfort de pied avant 100 comprend des flancs de jonction FJ1 et FJ2 reliant par l'intermédiaire chacun d'un congé et d'un arrondi la première surface de réception 101 à la surface de renforcement structurel latérale 102 et la surface de renforcement structurel latérale 102 à la deuxième surface de réception 103. Ces flancs délimitent la surface de renforcement structurel latérale 102 vers l'avant et vers l'arrière du véhicule, verticalement et sont donc des flancs avant et arrière. Ils sont tous les deux orientés dans la même direction par rapport à la surface latérale 102, c'est-à-dire vers l'intérieur du véhicule.

Le tunnel interne au renfort de pied avant est évasé vers l'embouchure haute EH et également évasé vers l'embouchure basse EB et comporte une section intermédiaire SI correspondant à environ un tiers de la longueur verticale de la pièce, le long de laquelle sa largeur horizontale, dans la direction longitudinale du véhicule, est sensiblement constante, les flancs de jonction FJ1 et FJ2 étant sensiblement parallèles l'un à l'autre.

La section intermédiaire SI présente sur la surface de renforcement structurel latérale 102 et de haut en bas une interface de fourreau de porte avant 113, des réservations traversantes 71 pour les éléments de charnière inférieure de portière, puis en descendant des réservations traversantes 111 pour la fixation d'inserts gonflants, et des réservations traversantes 110 pour la fixation d'inserts gonflants similaires aux réservations traversantes 111 qui sont présentes à la limite de l'évasement de l'embouchure basse EB.

Il y a également, sur la surface de renforcement structurel latérale 102 à la limite de l'évasement de l'embouchure haute EH, des réservations traversantes 72 pour les éléments de charnière supérieure de portière.

En l'absence de mesure spécifique de renforcement, lors d'un choc frontal, il a été mis en évidence une déformation excessive et pénalisante pour la tenue de la prestation en choc frontal. L'écrasement de la section du bas de pied avant et les plis sont très marqués entre l'interface de charnière inférieure de portière avant et le bas de pied avant.

Il a été choisi un traitement du problème à sa source, sans introduire un encombrant et pesant renfort supplémentaire. Le traitement s'est attaqué à la déformation du bas de section de pied avant 1.

La section intermédiaire SI présente donc, pour résoudre les problèmes rencontrés, sur la surface plane de renforcement structurel latérale 102, trois nervures N1, N2 et N3 qui sont des renfoncements en dessous de la côte de la surface de renforcement structurel, en direction de la côte des deux surfaces de réception 101 et 103, de formes oblongues s'étendant de l'approche d'un flanc de jonction à l'approche de l'autre flanc de jonction sans pour autant toucher ces flancs de jonction. La géométrie exacte, les courbures et les distances sont déterminées par la technique d'emboutissage, et la nécessité de ne pas déchirer la tôle.

Les trois nervures N1, N2 et N3 sont sensiblement parallèles les unes aux autres. Les nervures N1 et N2 sont à faible distance l'une de l'autre dans la zone la plus étroite du tunnel en forme de pied avant (ou la surface latérale 102 qui en constitue le toit), et ont approximativement la même longueur. La nervure N3 est quant à elle plus longue, est placée à une plus grande hauteur au-dessus du châssis (ou du sol) et dans une zone où le tunnel du renfort de pied avant (ou la surface latérale 102 qui en constitue le toit) est plus large du fait de l'évasement.

La nervure N2, placée légèrement plus en hauteur que la nervure N1, est suivie, en direction de la nervure N3, par les réservations traversantes 71 pour les éléments de charnière inférieure de portière. Ainsi, les deux nervures N1 et N2 sont en dessous de l'interface de passage d'éléments de charnière inférieure de portière.

Les nervures N1 et N2 sont séparées par les réservations traversantes 111 pour la fixation d'inserts gonflants, et les réservations traversantes 110 pour la fixation d'inserts gonflants sont présentes en dessous de la nervure N1, à la limite de l'évasement de l'embouchure basse EB.

La nervure N3 est présente en dessous de l'interface de fourreau de porte avant 113, sur la surface de renfort structurel latérale 102.

[Fig. 5] En figure 5, on a représenté les éléments évoqués précédemment en vue de coupe selon la coupe AA de la figure 4.

On visualise ainsi le côté d'habitacle 10, la doublure d'aile avant 30 et le longeron intérieur avant 40 qui sont tous les trois des pièces en tôle emboutie et qui forment deux tunnels (un tunnel du côté externe constitué par le côté d'habitacle 10 et un tunnel du côté interne constitué par la réunion de la doublure d'aile avant 30 et du longeron intérieur avant 40) dont la réunion des volumes, une fois qu'ils sont placés l'ouverture de l'un face à l'ouverture de l'autre, constitue le pied avant 1 du véhicule.

Le côté d'habitacle 10, la doublure d'aile avant 30 et le longeron intérieur avant 40 comprennent tous les trois des premières surfaces de réception 11, 31 et 41 respectivement et des deuxièmes surfaces de réception 13, 33 et 43, respectivement, autour du tunnel qui sont apposées deux par deux de la manière suivante, avec à chaque fois interposition de la surface de réception correspondante du renfort de pied avant 100 :
- du côté avant Av, c'est à dire du côté du passage de roue PR, sont apposées l'une contre l'autre, dans cet ordre, les premières surfaces de réception 11, 101, puis 31, avec en arrière-plan la surface 41 ;
- du côté arrière Ar, c'est-à-dire du côté de l'évidemment de portière EP, sont apposées l'une contre l'autre les deuxièmes surfaces de réception 13, 103, puis 43.

À l'intérieur du volume intérieur du tunnel du côté d'habitacle 10, est situé le renfort de pied avant 100, avec son tunnel imbriqué à l'intérieur du tunnel du côté d'habitacle 10. C'est donc à l'intérieur du volume intérieur du côté d'habitacle 10 que s'étend le volume du renfort de pied avant 100.

Ainsi, on visualise sur la figure de l'avant vers l'arrière en suivant la tôle du renfort de pied avant 100, la première surface de réception 101, le flanc de jonction FJ1, la surface de renforcement structurel latérale 102, le deuxième flanc de jonction FJ2 et la deuxième surface de réception 103. La surface de renforcement structurel latérale 102 est considérablement plus proche du côté d'habitacle 10 que du longeron intérieur avant 40 (rapport de 1 à 20).

La nervure N1 est visible dans la coupe sur la surface de renforcement structurel latérale 102. Il s'agit d'un renfoncement dans la surface de renforcement structurel latérale 102, dans la direction du longeron intérieur avant 40, sur une épaisseur de l'ordre d'1/10^{e} de la hauteur des flancs de jonction FJ1 et FJ2 du renfort de pied avant 100 (c'est-à-dire la hauteur du tunnel du renfort de pied avant 100). La géométrie de la nervure N1, comme de la nervure N2 et celle de la nervure N3, est adaptée à la faisabilité en emboutissage à chaud.

On précise que la longueur maximale de la zone de la surface de renforcement structurel qui est emboutie est de 41.54 mm pour la nervure N2 et de 45.295 mm pour la nervure N1. La largeur maximale de la zone de la surface de renforcement structurel qui est emboutie est de 25.918 mm pour la nervure N2 et de 25.781 mm pour la nervure N1, qui est donc légèrement plus longue et très légèrement plus étroite. Il résulte essentiellement de ces caractéristiques que les nervures N1 et N2 ont des profondeurs comprises entre 5 et 7 mm et des longueurs comprises entre 35 et 50 mm.

En tout état de cause, les nervures N1 et N2 sont amenées par leur dessin au plus près des faces avant et arrière du renfort de pied avant 100, c'est-à-dire les flancs de jonction FJ1 et FJ2, afin de limiter au maximum les surfaces planes qui peuvent faire apparaître des plis lors de la sollicitation du renfort de pied avant 100 en choc.

[Fig. 6] En figure 6, on a représenté les efforts et déformations subies par le pied avant 1 après un choc frontal, sur une vue similaire à celle de la figure 1. En teinte noire sont représentées les zones ayant subi des efforts significatifs, et on constate qu'elles sont très limitées en surface. On relève en particulier que la section intermédiaire SI est largement immune de tout affaiblissement lié à des contraintes trop élevées apportées à la structure métallique multi-couches présente dans le pied avant 1, constituée du côté d'habitacle 10, du renfort de pied avant 100 et de la doublure d'aile avant 30.

Il est donc inutile de développer et souder un nouveau renfort. On limite le rapprochement entre les flancs de jonction avant et arrière FJ1 et FJ2.

## Revendications

1. Pièce de tôle emboutie (100) pour la structuration interne et la résistance mécanique d'un pied avant (1) de carrosserie de véhicule automobile, comprenant une surface latérale (102) à positionner verticalement et, vis-à-vis du véhicule, longitudinalement, dans le volume du pied avant (1) entre le passage de roue (PR) et l'évidement de portière (EP), ladite surface latérale (102) étant limitée par un flanc avant (FJ1) et un flanc arrière (FJ2), et portant une interface (71) de passage d'éléments de charnière inférieure de portière avant, **caractérisée en ce que** ladite surface latérale (102) porte de plus une première et une deuxième nervures (N1, N2) en dessous de l'interface (71) de passage d'éléments de charnière inférieure de portière, s'étendant transversalement de l'approche du flanc avant (FJ1) à l'approche du flanc arrière (FJ2).

2. Pièce de tôle emboutie (100) selon la revendication 1, **caractérisée en ce que** les première et deuxième nervures (N1, N2) sont séparées par une interface d'implantation (111) d'un insert gonflant de bas de pied avant de carrosserie.

3. Pièce de tôle emboutie (100) selon la revendication 1 ou la revendication 2, **caractérisée en ce que** ladite surface latérale (102) porte une troisième nervure (N3) au-dessus de l'interface (71) de passage d'éléments de charnière et en dessous d'une interface de fourreau de portière (113).

4. Pièce de tôle emboutie (100) selon l'une des revendications 1 à 3, **caractérisée en ce que** la profondeur des première et deuxième nervures (N1, N2) est comprise entre 5 et 7 mm.

5. Pièce de tôle emboutie (100) selon l'une des revendications 1 à 4, **caractérisée en ce que** la longueur des première et deuxième nervures (N1, N2) est comprise entre 35 et 50 mm.

6. Pièce de tôle emboutie (100) selon l'une des revendications 1 à 5, **caractérisée en ce qu'**elle comprend une embouchure inférieure (EB) le long de laquelle le flanc arrière (FJ2) épouse le coude de bas d'évidement de portière (EP) sur sensiblement un quart de cercle et une embouchure supérieure (EH) au-dessus d'une interface (72) de passage d'éléments de charnière supérieure de portière portée par la surface latérale (102).

7. Carrosserie de véhicule automobile comprenant une pièce de tôle emboutie pour la structuration interne d'un pied avant selon l'une des revendications 1 à 6, **caractérisée en ce que** la pièce de tôle emboutie (100) pour la structuration interne et la résistance mécanique d'un pied avant est placée entre d'une part une tôle emboutie de côté extérieur d'habitacle (10) et d'autre part une tôle emboutie de doublure intérieure d'aile avant (30) et un longeron intérieur avant de bas de portière (40).

8. Carrosserie de véhicule automobile selon la revendication 7, **caractérisée en ce qu'**elle comprend un renfort de longeron de bas de portière (50) qui prolonge la pièce de tôle emboutie (100) pour la structuration interne et la résistance mécanique d'un pied avant vers l'arrière du véhicule entre la tôle emboutie de côté extérieur d'habitacle (10) et le longeron intérieur avant de bas de portière (40).

9. Carrosserie de véhicule automobile selon la revendication 7 ou la revendication 8, **caractérisée en ce qu'**elle comprend de plus un gousset supérieur de pied avant (60) qui porte avec la surface latérale (102) de la pièce de tôle emboutie (100) pour la structuration interne et la résistance mécanique d'un pied avant une interface de passage d'éléments de charnière supérieure de portière avant (72).

10. Véhicule automobile comprenant une carrosserie selon l'une des revendications 7 à 9 et une portière avant **caractérisé en ce que** la portière comprend une charnière inférieure de portière avant dont des éléments sont insérés dans ladite interface (71) de passage d'éléments de charnière inférieure de portière avant.

## Patentansprüche

1. Tiefziehblechteil (100) zur inneren Strukturierung und mechanischen Festigkeit eines Vorderfußes (1) einer Kraftfahrzeugkarosserie, mit einer zwischen dem Raddurchgang (PR) und der Türausnehmung (EP) vertikal und gegenüber dem Fahrzeug längs im Volumen des Vorderfußes (1) zu positionierenden Seitenfläche (102), wobei die Seitenfläche (102) durch eine Vorderflanke (FJ1) und eine Hinterflanke (FJ2) begrenzt ist und eine Grenzfläche (71) zum Durchgang von unteren Scharnierelementen trägt Vorderkante, **dadurch gekennzeichnet, dass** die Seitenfläche (102) außerdem eine erste und eine zweite Rippe (N1, N2) unterhalb der Grenzfläche (71) für den Durchgang von unteren Türscharnierelementen trägt, die sich quer von der Annäherung an die Vorderflanke (FJ1) bis zur Annäherung an die Hinterflanke (FJ2) erstrecken.

2. Tiefziehblechteil (100) nach Anspruch 1, **dadurch gekennzeichnet, dass** die erste und die zweite Rippe (N1, N2) durch eine Implantationsschnittstelle (111) von einem aufblasbaren Karosserieunterfußeinsatz getrennt sind.

3. Tiefziehblechteil (100) nach Anspruch 1 oder 2, **dadurch gekennzeichnet, dass** die Seitenfläche (102) eine dritte Rippe (N3) über der Scharnierelementdurchgangsgrenzfläche (71) und unter einer Türhülsengrenzfläche (113) trägt.

4. Tiefziehblechteil (100) nach einem der Ansprüche 1 bis 3, **dadurch gekennzeichnet, dass** die Tiefe der ersten und zweiten Rippe (N1, N2) zwischen 5 und 7 mm liegt.

5. Tiefziehblechteil (100) nach einem der Ansprüche 1 bis 4, **dadurch gekennzeichnet, dass** die Länge der ersten und zweiten Rippe (N1, N2) zwischen 35 und 50 mm beträgt.

6. Tiefziehblechteil (100) nach einem der Ansprüche 1 bis 5, **dadurch gekennzeichnet, dass** es eine untere Mündung (EB), entlang der die hintere Flanke (FJ2) an der unteren Abkröpfung der Türausnehmung (EP) über im Wesentlichen einen Viertelkreis anliegt, und eine obere Mündung (EH) über einer von der Seitenfläche (102) getragenen Schnittstelle (72) zum Durchgang von oberen Türscharnierelementen umfasst.

7. Kraftfahrzeugkarosserie mit tiefgezogenem Blechteil zur Innenstrukturierung eines Vorderfußes nach einem der Ansprüche 1 bis 6, **dadurch gekennzeichnet, dass** das tiefgezogene Blechteil (100) zur Innenstrukturierung und Festigkeit eines Vorderfußes zwischen einerseits einem innenseitigen tiefgezogenen Innenraumblech (10) und andererseits einem vorderen Innenwagentürinnenlängsträger (40) angeordnet ist.

8. Kraftfahrzeugkarosserie nach Anspruch 7, **dadurch gekennzeichnet, dass** sie eine Türunterholmverstärkung (50) umfasst, die das tiefgezogene Blechteil (100) zur inneren Strukturierung und mechanischen Festigkeit eines Vorderfußes nach hinten des Fahrzeugs zwischen dem innenraumaußenseitigen tiefgezogenen Blech (10) und dem vorderen innenliegenden Türunterholm (40) verlängert.

9. Kraftfahrzeugkarosserie nach Anspruch 7 oder Anspruch 8, **dadurch gekennzeichnet, dass** sie ferner einen vorderen oberen Fußkeil (60) aufweist, der mit der Seitenfläche (102) des tiefgezogenen Blechteils (100) zur inneren Strukturierung und mechanischen Festigkeit eines vorderen Fußes eine Grenzfläche (72) für den Durchgang von vorderen Türoberscharnierelementen trägt.

10. Kraftfahrzeug mit einer Karosserie nach einem der Ansprüche 7 bis 9 und einer Vordertür, **dadurch gekennzeichnet, dass** die Tür ein unteres Vordertürscharnier umfasst, dessen Elemente in die Schnittstelle (71) für den Durchgang von unteren Vordertürscharnierelementen eingesetzt sind.

## Claims

1. . Stamped sheet metal part (100) for the internal structure and mechanical strength of a front foot (1) of a motor vehicle body, comprising a lateral surface (102) to be positioned vertically and, with respect to the vehicle, longitudinally in the volume of the front foot (1) between the wheel passage (PR) and the door recess (EP), said lateral surface (102) being bounded by a front flank (FJ1) and a rear flank (FJ2), and carrying an interface (71) for passage of cart elements A lower front door end, **characterized in that** said side surface (102) further carries first and second ribs (N1, N2) below the lower door hinge passage interface (71) extending transversely from the approach of the front flank (FJ1) to the approach of the rear flank (FJ2).

2. . A stamped sheet metal part (100) according to claim 1, **characterized in that** the first and second ribs (N1, N2) are separated by an installation interface (111) of a front bodywork foot inflating insert.

3. . A stamped sheet metal part (100) according to claim 1 or claim 2, **characterized in that** said side surface (102) carries a third rib (N3) above the hinge element passage interface (71) and below a door sleeve interface (113).

4. . A pressed sheet metal part (100) according to one of claims 1 to 3, **characterized in that** the depth of the first and second ribs (N1, N2) is between 5 and 7 mm.

5. . A pressed sheet metal part (100) according to one of claims 1 to 4, **characterized in that** the length of the first and second ribs (N1, N2) is between 35 and 50 mm.

6. . A stamped sheet metal part (100) according to one of claims 1 to 5, **characterized in that** it comprises a lower mouth (EB) along which the rear flank (FJ2) follows the lower door recess bend (EP) over substantially a quarter of a circle and an upper mouth (EH) above an interface (72) for passage of upper door hinge elements carried by the side surface (102).

7. . Motor vehicle body comprising a pressed sheet metal part for the internal structuring of a front leg according to one of claims 1 to 6, **characterized in that** the pressed sheet metal part (100) for the internal structuring and mechanical strength of a front leg is arranged between, on the one hand, a pressed sheet metal on the outer side of a passenger compartment (10) and, on the other hand, a pressed sheet metal on the inner side of the front leg (30) and a front inner side of the door base (40).

8. . Motor vehicle body according to claim 7, **characterized in that** it comprises a door-base spar reinforcement (50) which extends the pressed sheet metal part (100) for the internal structuring and mechanical strength of a front foot towards the rear of the vehicle between the passenger compartment-side pressed sheet metal (10) and the front door-base inner spar (40).

9. . A motor vehicle body according to claim 7 or claim 8, **characterized in that** it further comprises a front foot top gusset (60) which carries with the side surface (102) of the stamped sheet metal part (100) for the internal structuring and mechanical strength of a front foot an interface for passing front door top hinge elements (72).

10. . Motor vehicle comprising a body according to one of Claims 7 to 9 and a front door **characterized in that** the door comprises a front door lower hinge, elements of which are inserted in said front door lower hinge passage interface (71).
